# EUROPÄISCHE PATENTSCHRIFT

(11) **EP 1 785 299 B1**
(45) Veröffentlichungstag und Bekanntmachung des Hinweises auf die Patenterteilung: **01.09.2010**
(21) Anmeldenummer: 06023032.3
(22) Anmeldetag: 06.11.2006
(51) Int. Cl.: B60H 1/34

(54) **Luftausströmer**
Air nozzle
Buse d'air

(30) Priorität: 11.11.2005 DE 102005054292
(43) Veröffentlichungstag der Anmeldung: 16.05.2007
(73) Patentinhaber: Behr GmbH & Co. KG, 70469 Stuttgart (DE)
(72) Erfinder: Dipl.-Ing. Benamira, Salah, 70180 Stuttgart (DE); Dr. Schaake, Norman, 71706 Markgröningen (DE)

(56) Entgegenhaltungen:
- WO-A-2005/016673
- WO-A-2005/021301
- DE-A1- 3 736 448
- FR-A1- 2 768 663

## Beschreibung

Die Erfindung betrifft einen Luftausströmer, insbesondere für ein Kraftfahrzeug, gemäß dem Oberbegriff des Anspruchs 1, ein Verfahren zur Steuerung einer Luftströmung in einem Luftführungskanal eines Luftausströmers, sowie ein Belüftungssystem für ein Kraftfahrzeug. Ein derartiger Luftausströmer ist beispielsweise in WO 2005/021301 A1, das den nächstliegenden Stand der Technik darstellt, offenbart.

Aus der DE 10 2004 038 016 A1 ist ein Luftausströmer zur Innenbelüftung von Räumen, wie Fahrgasträumen von Straßen- oder Schienenfahrzeugen, bekannt, der in einem ersten Betriebsfall einen gerichteten, strahlförmigen Luftaustritt ("Spotförmiger Luftaustritt") mit großer Eindringtiefe und in einem zweiten Betriebsfall einen diffusen Luftaustritt mit möglichst weit aufgefächertem Luftstrahl sowie beliebige, stetig zwischen diesen beiden Betriebsfällen einstellbare Mischbetriebsfälle ermöglicht, so dass sowohl eine schnelle Durchmischung der Raumluft als auch eine gleichmäßige, zugluftfreie Belüftung möglich ist. Der gerichtete, strahlförmige Luftaustritt wird mit einer möglichst turbulenzarmen, gleichförmig gerichteten Rohrströmung, der diffuse Luftaustritt hingegen mittels Impulstransport in normaler Richtung zur Strahlachse durch verstärkte Turbulenz und/oder Drall unter Zuhilfenahme von Luftleitblechen erreicht. Beim genannten Luftausströmer werden diese Strömungen in getrennten Luftkanälen für die unterschiedlichen Betriebsfälle geführt. Um jeweils einen von zwei zueinander parallel liegenden zylinderförmigen Teilkanäle ist dabei ein weiterer Teilkanal konzentrisch angeordnet, wobei die Luftströmung in den äußeren Teilkanälen jeweils durch Leiteinrichtungen mit Drall beaufschlagt wird; während die Luftströmung in den inneren Kanälen direkt austritt. Die Luftströme der einzelnen Teilkanäle sind dabei unabhängig voneinander steuerbar. Die genannte Bauform bedingt einen Luftaustritt aus zwei nebeneinander liegenden kreisrunden Austrittsflächen, die zusammen jedoch eine grob angenähert rechteckige oder eine vom Fahrzeughersteller aus Designgründen vorgegebene Fläche einnehmen, der durch die zwei kreisrunden Austrittsflächen nicht optimal ausgenutzt wird, so dass sich hier im Vergleich mit der Nutzung des gesamten rechteckigen Querschnitts höhere Strömungsgeschwindigkeiten und damit mehr Druckabfall ergeben.

Der Erfindung liegt daher die Aufgabe zugrunde, einen verbesserten Luf tausströmer zur Verfügung zu stellen. Des Weiteren ist ein besonders einfaches Verfahren zur Steuerung eines Luftstroms durch den erfindungsgemäßen Luftausströmer anzugeben.

Diese Aufgabe wird erfindungsgemäß gelöst durch einen Luftausströmer mit den Merkmalen des Anspruchs 1. Hinsichtlich des Verfahrens wird die Aufgabe erfindungsgemäß gelöst durch die Merkmale des Anspruchs 12.

Vorteilhafte Ausgestaltungen der Erfindung sind Gegenstand der Unteransprüche.

Erfindungsgemäß ist ein Luftausströmer mit mindestens einem Luftführungskanal vorgesehen. Typischerweise beansprucht dieser Luftführungskanal nur einen Teil des Bauraumes des Luftausströmers an dessen Einbauort, z.B. weil eine bestimmte Außenkontur des Luftausströmers durch das Design des Fahrzeugherstellers vorgegeben ist, die von einer aerodynamisch geeigneten Form für den Luftführungskanal abweicht. Auf diese Weise ist der Luftführungskanal zumindest teilweise von Hohlräumen umgeben, die nach außen durch die Wandung des Luftausströmers oder, falls dieser keine geschlossene Wandung aufweist, durch die Formgebung des Einbauorts, z.B. einer Konsole oder eines Armaturenbretts, begrenzt sind. Durch eine Art Bypass strömt ein Teil des Luftstroms in diese Hohlräume und durchströmt diese bis in den zu belüftenden Innenraum hinein. So ergeben sich ein größerer Austrittsquerschnitt für den Luftstrom und damit geringere Strömungsgeschwindigkeiten und ein geringerer Druckabfall. Darüber hinaus ist eine breite Palette von Düsenformen möglich.

Je nach Art und Funktion des Luftausströmers kann dieser einen oder mehrere Luftführungskanäle umfassen. Erfindungsgemäß sind der oder die Luftführungskanäle in jeweils mindestens zwei Teilkanäle aufgeteilt. Dabei ist vorzugsweise mindestens einer der Teilkanäle um einen anderen, bevorzugt zylinderförmigen Teilkanal herum angeordnet, insbesondere konzentrisch in Art eines Ringkanals hierzu. Dabei ist vorzugsweise im äußeren ringförmigen Teilkanal mindestens eine Luftleiteinrichtung vorgesehen. Diese kann wendelartig, spiralförmig oder als Schaufelkranz ausgeführt sein. Auf diese Weise ist es möglich, im inneren Teilkanal einen geradlinigen Luftstrom für einen spotförmigen Luftaustritt und im äußeren Teilkanal einen mit Drall behafteten Luftstrom für einen diffusen Luftaustritt zu führen. Der Luftstrom für die Hohlräume zweigt erfindungsgemäß von dem äußeren Teilkanal ab, um ebenfalls zum diffusen Luftaustritt beizutragen. In einer weiteren Variante kann zumindest ein Teilkanal auch einen elliptischen Querschnitt aufweisen.

Zweckmäßigerweise werden die Hohlräume zusätzlich mit Luftleiteinrichtungen versehen, so dass die Richtung des dort austretenden Luftstroms beeinflussbar ist. Der dadurch erhöhte Druckwiderstand verhindert außerdem, dass zuviel Strömung durch die Hohlräume, anstatt durch den äußeren Teilkanal austritt.

Für die Zuführung der Luftströme in die Teilkanäle und Hohlräume ist bevorzugt strömungseingangsseitig im oder vor dem Luftführungskanal eine Dosiervorrichtung vorgesehen. Zum separaten oder gemeinsamen Öffnen und Schließen der Teilkanäle bzw. der Hohlräume können darüber hinaus mehrere Luftklappen vorgesehen sein.

Die Richtung der ausströmenden Luft kann vorteilhafterweise mit einer Vorrichtung zur Einstellung der Richtung des Luftstroms beeinflusst werden. Diese Vorrichtung ist strömungsausgangsseitig im Luftführungskanal angeordnet. Beispielsweise ist diese in Lamellenform ausgeführt. Auch kann diese Vorrichtung ein oder mehrere Klappen zum gemeinsamen oder separaten Öffnen oder Schließen der Teilkanäle und der Hohlräume aufweisen.

Zweckmäßigerweise sind die Luftleiteinrichtungen in den Teilkanälen und/oder den Hohlräumen aus Blech, Kunststoff oder Gummi gebildet. Dies ermöglicht eine einfache und flexible Montage. Zudem können die Luftleiteinrichtungen eine beliebige, insbesondere eine vorgegebene Strömungscharakteristik entsprechende Form, z. B. Lamellenform, Spiralform, aufweisen.

Beim Verfahren zur Steuerung der Luftströmung eines erfindungsgemäßen Luftausströmers wird der zumindest teilweise von Hohlräumen umgebende Luftführungskanal von einem Luftstrom durchströmt, wobei ein Teil des Luftstroms in diese Hohlräume eingeführt und durch diese in Art eines Bypasses geführt wird.

In einer weiteren Ausführungsform weist der Luftführungskanal mindestens zwei Teilkanäle zum Führen eines Hauptluftstroms auf. Dabei wird eine erste Luftklappe zumindest eines ersten Teilkanals und eine zweite Luftklappe zumindest eines zweiten Teilkanals mittels einer Steuereinrichtung wechselseitig geöffnet und geschlossen.. Bevorzugt werden dabei wechselseitig zumindest der erste Teilkanal für diffusen Luftaustritt und zumindest der zweite Teilkanal für spotförmigen Luftaustritt geschlossen und geöffnet. Dadurch kommt es zu einer wechselseitigen Ausströmung von diffuser Luft und spotförmig ausströmender Luft. Dies wird von einem Fahrzeuginsassen als Luftfächeln wahrgenommen und kann zur Komfortsteigerung, insbesondere bei hohen Fahrzeuginnenraumtemperaturen beitragen. Der Luftstrom für die Hohlräume zweigt bevorzugt von dem äußeren Teilkanal ab, um ebenfalls zum diffusen Luftaustritt beizutragen.

Ausführungsbeispiele der Erfindung werden anhand einer Zeichnung näher erläutert. Darin zeigen:
- Fig. 1: schematisch einen Querschnitt durch einen Luftausströmer mit einem Luftführungskanal, aufgeteilt in einen inneren Teilkanal für einen spotförmigen und einen äußeren Teilkanal für einen diffusen Luftaustritt sowie mit den Luftkanal umgebenden Hohlräume innerhalb einer Außenkontur des Luftausströmers,
- Fig. 2: schematisch einen Querschnitt durch einen Luftausströmer mit zwei Luftführungskanälen,
- Fig. 3 und 4: perspektivische Ansichten eines Luftausströmers gemäß Fig. 2 mit zusätzlichen Luftleiteinrichtungen in den Hohlräumen,
- Fig. 5: eine perspektivische Ansicht eines Schaufelkranzes als Luftleiteinrichtung in einem äußeren Teilkanal eines Luftführungskanals,
- Fig. 6 und 7: schematische Vorderansichten weiterer Ausführungsformen von Luftausströmern mit alternativen Außenkonturen,
- Fig. 8: eine Vorderansicht eines Luftausströmers gemäß Fig. 3 mit als Schaufelkränze ausgeführten Luftleheinrichtungen in den beiden äußeren Teilkanälen und einer Iamellenförmigen Vorrichtung zur Einstellung der Richtung des Luftstromes,
- Fig. 9: eine perspektivische Ansicht eines Luftausströmers gemäß Fig. 3 mit einer Dosiervorrichtung für die in die Teilkanäle zuführenden Luftströme in Explosionsdarstellung,
- Fig. 10: eine perspektivische Ansicht eines Luftausströmers gemäß Fig. 9 in Explosionsdarstellung, wobei die Lage der in der Dosiervorrichtung befindlichen Luftklappen deutlich wird,
- Fig. 11: eine perspektivische Ansicht der Dosiervorrichtung mit den darin angeordneten Luftklappen
- Fig. 12: eine Rückansicht eines Luftausströmers gemäß Fig. 8 mit geöffneten Luftklappen für diffusen Luftaustritt und geschlossenen Luftklappen für spotförmigen Luftaustritt,
- Fig. 13: eine Rückansicht eines Luftausströmers gemäß Fig. 8 mit geöffneten Luftklappen,
- Fig. 14: eine Rückansicht eines Luftausströmers mit jeweils einem Übergangsstück zur Einleitung des Luftstroms in den zugehörigen inneren Teilkanal,
- Fig. 15: eine Rückansicht eines Luftausströmers gemäß Fig. 8 mit geschlossenen Luftklappen, und
- Fig. 16: eine Rückansicht eines Luftausströmers gemäß Fig. 8 mit geöffneten Luftklappen für spotförmigen Luftaustritt und geschlossenen Luftklappen für diffusen Luftaustritt

Einander entsprechende Teile sind in allen Figuren mit den gleichen Bezugszeichen versehen.

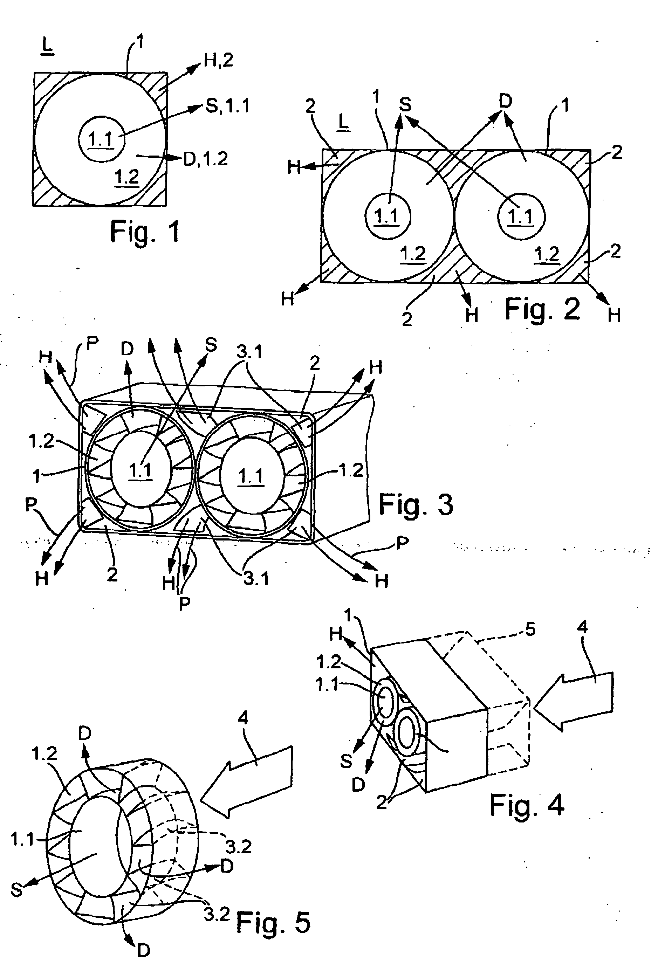

In Figur 1 ist eine mögliche Ausführungsform für einen Luftausströmer L gezeigt, der einen Luftführungskanal 1 mit einem inneren, zylinderförmigen Teilkanal 1.1 für den spotförmigen Luftaustritt S und einem um diesen herum konzentrisch angeordneten Teilkanal 1.2 für den diffusen Luftaustritt D umfasst. Je nach Art und Aufbau des Luftführungskanals 1 kann die Innenringwand des äußeren Teilkanals 1.2, der als Ringkanal ausgebildet ist, die Außenwand des innen liegenden Teilkanals 1.1 bilden. Aufgrund der unterschiedlichen Strömungsausgangsformen wird der innen liegende Teilkanal 1.1 auch als Spotkanal und der äußere Teilkanal 1.2 als Drallkanal bezeichnet.

Die Außenkontur des gezeigten Luftausströmers L ist quadratisch. Alternativ kann der Luftausströmer L auch eine beliebige andere geometrische Außenkontur aufweisen. Je nach Art und Einbauort des Luftausströmers L kann dessen Außenkontur durch ein zugehöriges Gehäuse oder durch die Wände der benachbarten Komponenten am Einbauort und somit durch den Einbauort gebildet sein.

Aufgrund des zumeist eine runde Außenkontur aufweisenden Luftführungskanals 1 und des eine kantige, z. B. rechteckige, dreieckige, quadratische oder unter Umständen auch mehreckige Außenkontur aufweisenden Luftausströmers L ist der Luftführungskanal 1 zumindest teilweise von Hohlräumen 2 umgeben, die in der Figur 1 schraffiert dargestellt sind. In den Hohlräumen 2 wird in Art eines zu den Teilkanälen 1.1 und 1.2 parallel verlaufenden Bypass-Kanals ein anteiliger Luftstrom für einen weiteren diffusen Luftaustritt H geführt.

Der Luftausströmer L wird in einem nicht näher dargestellten Belüftungssystem als eine Komfortdüse eingesetzt, deren Luftaustritt in einen Innenraum eines Fahrzeugs mündet. Durch die Nutzung der Hohlräume 2 des Luftausströmers L für einen weiteren diffusen Luftaustritt H zusätzlich zum spotförmigen Luftaustritt S und diffusen Luftaustritt D über die Teilkanäle 1.1 bzw. 1.2 wird der Luftausströmer L auch als Komfordüse mit Bypass bezeichnet.

Figur 2 zeigt eine alternative Ausführungsart eines Luftausströmers L. Hierbei umfasst der Luftausströmer L zwei Luftführungskanäle 1, die analog zum Luftausströmer L gemäß Figur 1 jeweils mehrere zugehörige Teilkanäle 1.1, 1.2 umfassen. Dabei sind zusätzlich zu den Höhträumen 2 zwischen der Außenkontur des Luftführungskanals 1 und der Innenkontur des Luftausströmers L Hohlräume 2 zwischen den beiden Luftführungskanälen 1 gebildet.

Figur 3 und 4 zeigen den Luftausströmer L gemäß Figur 2 in perspektivischer Ansicht. Zum Führen eines Luftstroms 4 durch den Luftausströmer L sind in den Hohlräumen 2 zugehörige Luftlefteinricbtungen 3.1 angeordnet, um die dort ausströmende Luft zielgerichtet abzuleiten, wie durch Pfeile P angedeutet ist. Die Luftleiteinrichtungen 3.1 weisen eine derartige Form auf, dass ein diffuser Luftaustritt H bewirkt wird.

In Figur 4 ist eine Dosiervorrichtung 5 des Luftausströmers L zum Zuführen eine den Luftführungskanal 1 durchströmenden Luftstroms 4 gezeigt. Die Dosiervorrichtung 5 dient der zielgerichteten Verteilung des Luftstromes 4 auf die Teilkanäle 1.1 und 1.2. Je nach Art und Aufbau des Luftausströmers L kann der in Art eines Bypasses in den Hohlräumen 2 geführte anteilige Luftstrom 4 über die Dosiervorrichtung 5 in die Hohlräume 2 geführt werden. Alternativ oder zusätzlich kann der anteilige Luftstrom 4 für die Hohlräume 2 aus dem äußeren Teilkanal 1.2 abgezweigt und in die Hohlräume 2 geführt werden. Hierzu ist der äußere Teilkanal 1.2, insbesondere dessen Wandung in nicht näher dargestellter Art und Weise beispielsweise bereichsweise perforiert ausgebildet oder mit entsprechenden Strömungsauslässen versehen.

In Figur 5 ist beispielhaft eine dem äußeren Teilkanal 1.2 zugehörige Luftleiteinrichtung 3.2 dargestellt. Für einen diffusen Luftaustritt an der Strömungsausgangsseite des Teilkanals 1.2 ist die Luftleiteinrichtung 3.2 als ein Schaufelkranz ausgeführt. Der im Teilkanal 1.2 geführte Luftstrom wird im Schaufelkranz verdrallt und mit Rotation behaftet, so dass ein diffuser Luftaustritt D erzielt wird. Der Schaufelkranz ist eine mögliche Ausführungsform für die Luftleiteinrichtung 3.2. Es kann auch jede andere beliebige Leiteinrichtung, welche einen diffusen Luftaustritt D ermöglicht, vorgesehen sein.

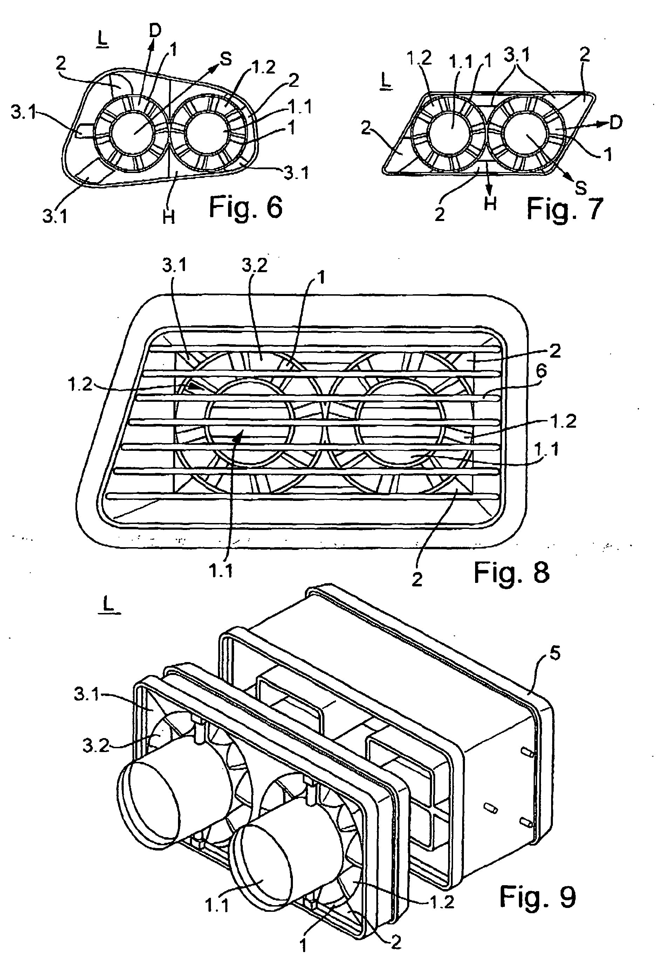

In den Figuren 6 und 7 sind alternative Ausführungsformen für einen Luftausströmer L gezeigt, die sich von dem in der Figur 3 gezeigten Luftausströmer L jedoch nur durch ihre Außenkonturen unterscheiden. D.h. durch die Kontur eines den Luftausströmer L begrenzenden Gehäuses bzw durch die Kontur der den Luftausströmer L umgebenden Komponenten, in welche der Luftausströmer L eingebaut wird. Die Funktion des Luftausströmers L bleibt unverändert. In den beiden Figuren 6 und 7 ist der Luftausströmer L mit zwei Luftführungskanälen 1 mit den Teilkanälen 1.1 und 1.2 für spotförmigen Luftaustritt S und diffusen Luftaustritt D sowie den Hohlräumen 2 für einen weiteren diffusen Luftaustritt H.

Figur 8 zeigt einen Luftausströmer L gemäß Figur 3 mit einer Vorrichtung 6 zur Einstellung der Richtung des austretenden Luftstromes, so dass dieser gezielt in bestimmte Bereiche des Innenraumes gelenkt werden kann. In Figur 8 weist die Vorrichtung 6 eine horizontal verlaufende Lamellenform auf. Die Vorrichtung 6 kann je nach Einbauort aber auch eine andere, eine vorgegebene Ausströmung entsprechend bewirkende Form aufweisen.

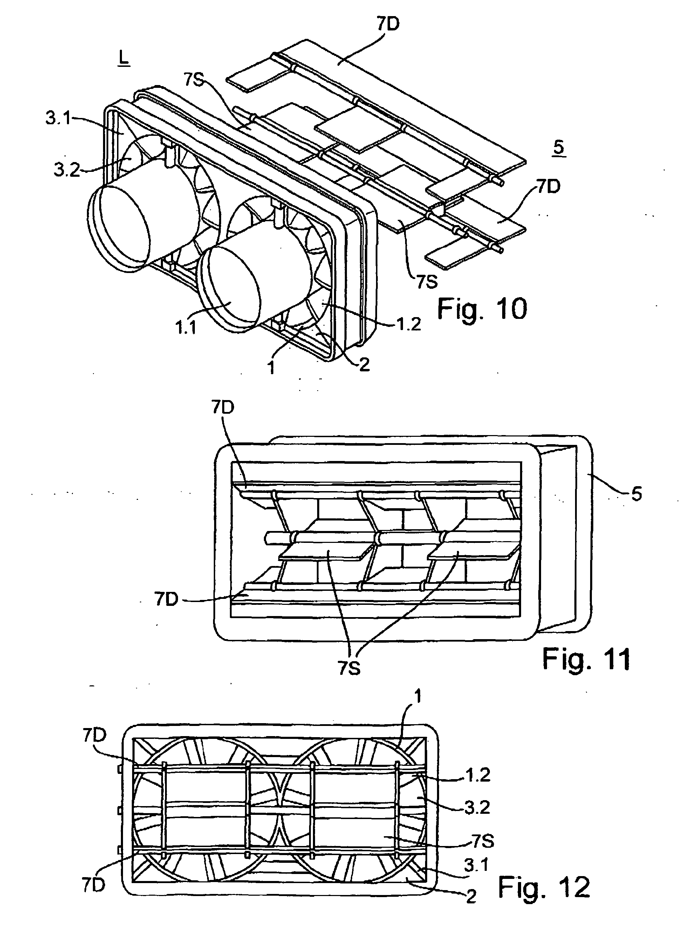

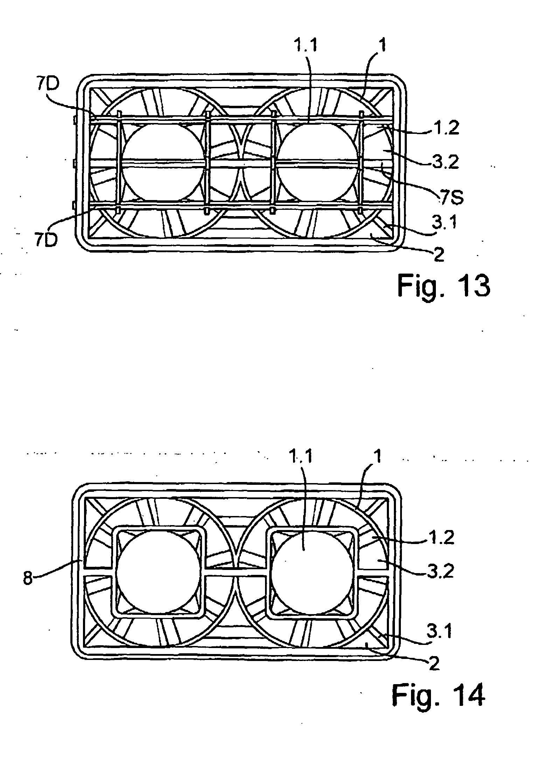

In Figur 9 ist ein Luftausströmer L gemäß Figur 3 mit einer Dosiervorrichtung 5 in Explosionsdarstellung gezeigt. Die Dosiervorrichtung 5 ist in der Darstellung zur Verdeutlichung der Funktion vom Luftausströmer L abgezogen dargestellt. Die Dosiervorrichtung 5 ist mit Luftklappen 7D und 7S versehen, wie in Figur 10 näher dargestellt. Dabei wird mit der Luftklappe 7D der Luftstrom im zweiten Teilkanal 1.2 und mit der Luftklappe 7S der Luftstrom im ersten Teilkanal 1.1 gesteuert. Die Form und Abmessungen der Luftklappen 7D und 7S sind dabei derart ausgeführt, dass die zugehörigen Teilkanäle 1.1 und 1.2 vollständig geschlossen oder geöffnet werden können. Zudem kann über eine Zwischenstellung der Luftklappen 7D und 7S eine Steuerung der Luftstrommenge bewirkt werden. Um den Luftstrom von hier in den inneren Teilkanal 1.1 einzuleiten, wird an dessen Lufteintritt ein Übergangsstück 8 benötigt, wie in Figur 14 näher dargestellt.

Figur 11 verdeutlicht noch einmal die Lage der Luftklappen 7D und 7S in der Dosiervorrichtung 5. Die nachfolgenden Figuren 12 bis 16 zeigen verschiedene Klappenstellungen und dadurch bewirkte Betriebsstellungen des Luftausströmers L.

In Figur 12 sind die Luftklappen 7D geöffnet und die Luftklappen 7S geschlossen. In dieser Betriebsstellung wird der Luftstrom durch die äußeren Teilkanäle 1.2 und die Hohlräume 2 ausgeströmt. Der Luftaustritt D bzw. H ist demzufolge diffus.

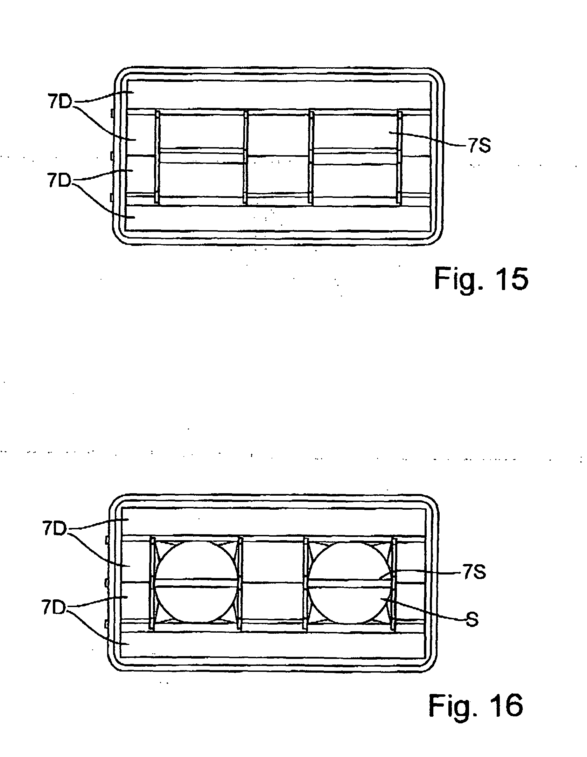

Figur 13 zeigt dagegen eine Mischbetriebsstellung, in der alle Luftklappen 7D und 7S geöffnet sind, so dass die Luft in der Mitte spotförmig und außen diffus ausströmt. Bei der in Figur 15 gezeigten Betriebsstellung sind alle Luftklappen 7S und 7D geschlossen, so dass keine Luft ausströmt. In Figur 16 ist der Luftausströmer L in der Betriebsstellung spotförmiger Luftaustritt S, da die Luftklappen 7S geöffnet und die Luftklappen 7D geschlossen sind.

Selbstverständlich sind auch Ausführungsformen denkbar mit mehr als zwei Luftführungskanälen 1, beispielsweise drei oder vier, die in einem allgemein kantige Außenkontur aufweisenden Luftausströmers L angeordnet sind und bei welchen die, die Luftführungskanäle 1 umgebenden Hohlräume 2 eine anteiligen Luftstrom führen können.

## Patentansprüche

1. Luftausströmer (L), insbesondere für ein Kraftfahrzeug mit mindestens einem Luftführungskanal (1) zum Führen eines Luftstroms (4), wobei der Luftführungskanal (1) mindestens einen inneren (1.1) und einen aüßeren (1.2) um diesen herum angeordneten Teilkanal, umfasst und zumindest teilweise von Hohlräumen (2) umgeben ist, die durch die Außenkontur des Luftausströmers (L) oder dessen Einbauort begrenzt sind, wobei ein Teil des Luftstroms (4) in diese Hohlräume (2) einführbar und durch diese strömbar ist, **dadurch gekennzeichnet, dass** der Teil des Luftstroms (4) für die Hohlräume (2) von einem äußeren Teilkanal (1.2) abzweigbar ist.

2. Luftausströmer (L) nach Anspruch 1, **dadurch gekennzeichnet, dass** die Hohlräume (2) mit mindestens einer zugehörigen Luftleiteinrichtung (3.1) versehen sind.

3. Luftausströmer (L) nach einem der Ansprüche 1 bis 2, **dadurch gekennzeichnet, dass** mindestens einer der Teilkanäle (1.2) mit mindestens einer zugehörigen Luftleiteinrichtung (3.2) versehen ist.

4. Luftausströmer (L) nach einem der Ansprüche 1 bis 3, **dadurch gekennzeichnet, dass** mindestens einer der Teilkanäle (1.1) im Wesentlichen zylinder- oder ellipsenförmig ist.

5. Luftausströmer (L) nach einem der Ansprüche 1 bis 4, **dadurch gekennzeichnet, dass** einer der Teilkanäle (1.1) zylinderförmig ausgebildet ist und ein weiterer Teilkanal (1.2) in Art eines Ringkanals um den zylinderfömigen Teilkanal (1.1) angeordnet ist.

6. Luftausströmer (L) nach einem der Ansprüche 1 bis 5, **dadurch gekennzeichnet, dass** mindestens ein Teilkanal (1.1) konzentrisch in mindestens einem weiteren Teilkanal (1.2) angeordnet ist.

7. Luftausströmer (L) nach einem der Ansprüche 2 bis 6, **dadurch gekennzeichnet, dass** die Luftleiteinrichtung (3.2) in mindestens einem der Teilkanäle (1.2) wendelartig, spiralförmig oder als Schaufelkranz ausgeführt ist.

8. Luftausströmer (L) nach einem der Ansprüche 2 bis 7, **dadurch gekennzeichnet, dass** die Luftleiteinrichtung (3.1, 3.2) in den Teilkanälen (1.1, 1.2) und/oder Hohlräumen (2) aus Blech, Kunststoff oder Gummi ausgeführt ist.

9. Luftausströmer (L) nach einem der Ansprüche 2 bis 8, **dadurch gekennzeichnet, dass** strömungseingangsseitig eine Dosiervorrichtung (5) angeordnet ist, die derart ausgebildet ist, dass die den einzelnen Teilkanälen (1.1, 1.2) und/oder Hohlräumen (2) zuführbare Luft steuerbar ist.

10. Luftausströmer (L) nach einem der Ansprüche 1 bis 9, **dadurch gekennzeichnet, dass** strömungsausgangsseitig eine Vorrichtung (6) zur Einstellung der Richtung des ausströmenden Luftstroms (4) angeordnet ist.

11. Luftausströmer (L) nach Anspruch 9 oder 10, **dadurch gekennzeichnet, dass** die Dosiervorrichtung (5) mindestens eine Luftklappe (7D, 7S) umfasst.

12. Verfahren zur Steuerung einer Luftströmung (4) in einem Luftführungskanal (1) eines Luftausströmer (L) nach einem der Ansprüche 1 bis 11, wobei der Luftführungskanal (1) mindestens zwei Teilkanäle (1.1, 1.2) umfasst durch welche ein Hauptluftstrom des Luftstroms (4) geführt wird und zumindest teilweise von Hohlräumen (2) umgeben ist, die durch die Außenkontur des Luftausströmers (L) oder dessen Einbauort begrenzt sind, wobei ein Teil des Luftstroms (4) in diese Hohlräume (2) eingeführt und durch diese in Art eines Bypasses geführt wird, **dadurch gekennzeichnet, dass** der Teil des Luftstroms (4) für die Hohlräume (2) von einem äußeren Teilkanal (1.2) abgezweigt wird.

13. Verfahren nach Anspruch 12, **dadurch gekennzeichnet, dass** strömungeingangsseitig eine erste Luftklappe (7D) für einen ersten Teilkanal (1.2) und eine zweite Luftklappe (7S) für einen zweiten Teilkanal (1.1) vorgesehen sind, wobei die erste und die zweite Luftklappe (7D, 7S) mittels einer Steuereinrichtung wechselseitig geöffnet und geschlossen werden.

14. Belüftungssystem für ein Kraftfahrzeug mit mindestens einem Luftausströmer (L) nach einem der Ansprüche 1 bis 11.

## Claims

1. An air nozzle (L), particularly for a motor vehicle, comprising at least one air conducting channel (1) for conducting an air flow (4), the air conducting channel (1) comprising at least one inner (1.1) and one outer (1.2) partial channel disposed around this air conducting channel and being surrounded at least partially by hollow spaces (2), which are delimited by the outer contour of the air nozzle (L) or the installation site thereof, part of the air flow (4) being introducible into these hollow spaces (2) and able to flow through the same, **characterized in that** the part of the air flow (4) for the hollow spaces (2) can be branched off an outer partial channel (1.2).

2. The air nozzle (L) according to claim 1, **characterized in that** the hollow spaces (2) are provided with at least one associated air guidance device (3.1).

3. An air nozzle (L) according to any one of claims 1 to 2, **characterized in that** at least one of the partial channels (1.2) is provided with at least one associated air guidance device (3.2).

4. An air nozzle (L) according to any one of claims 1 to 3, **characterized in that** at least one of the partial channels (1.1) is substantially cylindrical or elliptical.

5. An air nozzle (L) according to any one of claims 1 to 4, **characterized in that** one of the partial channels (1.1) has a cylindrical configuration and another partial channel (1.2) is disposed in the manner of an annular channel around the cylindrical partial channel (1.1).

6. An air nozzle (L) according to any one of claims 1 to 5, **characterized in that** at least one partial channel (1.1) is disposed concentrically in at least one further partial channel (1.2).

7. An air nozzle (L) according to any one of claims 2 to 6, **characterized in that** the air guidance device (3.2) is configured spirally, helically or as a blade ring in at least one of the partial channels (1.2).

8. An air nozzle (L) according to any one of claims 2 to 7, **characterized in that** the air guidance device (3.1, 3.2) is made of sheet metal, plastic or rubber in the partial channels (1.1, 1.2) and/or hollow spaces (2).

9. An air nozzle (L) according to any one of claims 2 to 8, **characterized in that** a metering device (5) is disposed on the flow inlet side, which is designed such that the air that can be supplied to the individual partial channels (1.1, 1.2) and/or hollow spaces (2) can be controlled.

10. An air nozzle (L) according to any one of claims 1 to 9, **characterized in that** a device (6) for adjusting the direction of the outflowing air flow (4) is disposed on the flow out side.

11. The air nozzle (L) according to claim 9 or 10, **characterized in that** the metering device (5) comprises at least one air throttle (7D, 7S).

12. A method for controlling an air flow (4) in an air conducting channel (1) of an air nozzle (L) according to any one of claims 1 to 11, the air conducting channel (1) comprising at least two partial channels (1.1, 1.2) through which a primary air flow of the air flow (4) is conducted and at least partially surrounded by hollow spaces (2), which are delimited by the outer contour of the air nozzle (L) or the installation site thereof, part of the air flow (4) being introduced into these hollow spaces (2) and being conducted through the same in the manner of a bypass, **characterized in that** the part of the air flow (4) for the hollow spaces (2) is branched off an outer partial channel (1.2).

13. The method according to claim 12, **characterized in that** a first air throttle (7D) for a first partial channel (1.2) and a second air throttle (7S) for a second partial channel (1.1) are disposed on the flow inlet side, the first and second air throttles (7D, 7S) being alternately opened and closed by way of a control apparatus.

14. A ventilation system for a motor vehicle, comprising at least one air nozzle (L) according to any one of claims 1 to 11.

## Revendications

1. Diffuseur d'air (L), en particulier pour un véhicule automobile comprenant au moins un conduit de guidage d'air (1) servant au guidage d'un flux d'air (4), où le conduit de guidage d'air (1) comprend au moins un conduit partiel intérieur (1.1) et un conduit partiel extérieur (1.2) disposé tout autour de ce conduit partiel intérieur, et est entouré au moins partiellement par des espaces creux (2) qui sont délimités par le contour extérieur du diffuseur d'air (L) ou par son emplacement de montage, où une partie du flux d'air (4) peut être introduite dans ces espaces creux (2) et peut s'écouler à travers ces mêmes espaces creux,
**caractérisé en ce que** la partie du flux d'air (4) prévue pour les espaces creux (2) peut bifurquer à partir d'un conduit partiel extérieur (1.2).

2. Diffuseur d'air (L) selon la revendication 1, **caractérisé en ce que** les espaces creux (2) sont dotés d'au moins un dispositif déflecteur d'air (3.1) associé.

3. Diffuseur d'air (L) selon l'une des revendications 1 ou 2, **caractérisé en ce qu'**au moins l'un des conduits partiels (1.2) est doté d'au moins un dispositif déflecteur d'air (3.2) associé.

4. Diffuseur d'air (L) selon l'une quelconque des revendications 1 à 3, **caractérisé en ce qu'**au moins l'un des conduits partiels (1.1) est sensiblement en forme de cylindre ou d'ellipse.

5. Diffuseur d'air (L) selon l'une quelconque des revendications 1 à 4, **caractérisé en ce que** l'un des conduits partiels (1.1) est configuré en forme de cylindre, et un autre conduit partiel (1.2) est disposé autour du conduit partiel (1.1) en forme de cylindre, à la façon d'un conduit annulaire.

6. Diffuseur d'air (L) selon l'une quelconque des revendications 1 à 5, **caractérisé en ce qu'**au moins un conduit partiel (1.1) est disposé de façon concentrique dans au moins un autre conduit partiel (1.2).

7. Diffuseur d'air (L) selon l'une quelconque des revendications 2 à 6, **caractérisé en ce que** le dispositif déflecteur d'air (3.2), dans au moins l'un des conduits partiels (1.2), est réalisé en forme d'hélice, en forme de spirale ou bien comme une couronne de pales.

8. Diffuseur d'air (L) selon l'une quelconque des revendications 2 à 7, **caractérisé en ce que** le dispositif déflecteur d'air (3.1, 3.2) placé dans les conduits partiels (1.1, 1.2) et / ou dans les espaces creux (2) est en tôle, en matière plastique ou en caoutchouc.

9. Diffuseur d'air (L) selon l'une quelconque des revendications 2 à 8, **caractérisé en ce qu'**un dispositif de dosage (5) est disposé côté entrée d'écoulement, dispositif de dosage qui est configuré de manière telle, que soit réglable l'air pouvant être fourni aux différents conduits partiels (1.1, 1.2) et / ou aux espaces creux (2).

10. Diffuseur d'air (L) selon l'une quelconque des revendications 1 à 9, **caractérisé en ce qu'**un dispositif (6) servant au réglage de la direction du flux d'air (4) s'écoulant est disposé côté sortie d'écoulement.

11. Diffuseur d'air (L) selon la revendication 9 ou 10, **caractérisé en ce que** le dispositif de dosage (5) comprend au moins un volet d'air (7D, 7S).

12. Procédé de réglage d'un écoulement d'air (4) dans un conduit de guidage d'air (1) d'un diffuseur d'air (L) selon l'une quelconque des revendications 1 à 11, où le conduit de guidage d'air (1) comprend au moins deux conduits partiels (1.1, 1.2) à travers lesquels un écoulement d'air principal du flux d'air (4) est guidé et est entouré au moins partiellement par des espaces creux (2) qui sont délimités par le contour extérieur du diffuseur d'air (L) ou par son emplacement de montage, où une partie du flux f'air (4) est introduite dans ces espaces creux (2) et guidée à travers ceux-ci à la façon d'une dérivation,
**caractérisé en ce que** la partie du flux d'air (4) prévue pour les espaces creux (2) bifurque à partir d'un conduit partiel extérieur (1.2).

13. Procédé selon la revendication 12, **caractérisé en ce qu'**il est prévu, côté entrée d'écoulement, un premier volet d'air (7D) pour un premier conduit partiel (1.2) et un deuxième volet d'air (7S) pour un deuxième conduit partiel (1.1), où les premier et deuxième volets d'air (7D, 7S) sont ouverts et fermés alternativement au moyen d'un dispositif de commande.

14. Système de ventilation pour un véhicule automobile, comprenant au moins un diffuseur d'air (L) selon l'une quelconque des revendications 1 à 11.
